# EUROPEAN PATENT APPLICATION

(11) **EP 3 089 410 A1**
(43) Date of publication of application: **02.11.2016**
(21) Application number: 14874996.3
(22) Date of filing: 22.12.2014
(51) Int. Cl.: H04L 12/725, H04L 12/803, H04L 29/08

(54) **NODE DISTRIBUTION METHOD AND CONTROL CENTER**

(30) Priority: 24.12.2013 CN 201310719210; 24.12.2013 CN 201310718645
(71) Applicant: LE Holdings (Beijing) Co., Ltd., Beijing 100025 (CN); Lecloud Computing Co., Ltd., Chaoyang District Beijing 100025 (CN)
(72) Inventor: XIA, Yangang, Beijing 100025 (CN); LI, Hongfu, Beijing 100025 (CN); WU, Yazhou, Beijing 100025 (CN); BAI, Junfeng, Beijing 100025 (CN); LI, Yansong, Beijing 100025 (CN)
(74) Representative: Viering, Jentschura & Partner mbB Patent- und Rechtsanwälte
(86) International application number: PCT/CN2014/094561
(87) International publication number: WO 2015/096680

(57) **Abstract**

Disclosed are a node distribution method and control center, the method comprising: receiving a scheduling request message sent by a UE; according to the scheduling request message, checking whether the UE is in a predetermined set; if yes, then checking whether the bandwidth of the node configured for the UE is occupied, and obtaining the check result, the node being a preferred node preconfigured for the UE; according to the check result, scheduling the UE to access the preferred node or other nodes. The node distributing method and control center provided in the present invention can balance the pressure between nodes, preferentially use resources, improve the quality of service of nodes, and increase website response speed.

## Description

### CROSS-REFERENCE

This application is based upon Chinese Patent Application 201310719210.1, titled "Node Distribution Method and Control Center", filed on December 24, 2013 and Chinese Patent Application 201310718645.4, titled "Node Distribution Method and Control Center", filed on December 24, 2013, the entire contents of which are incorporated herein by reference.

### TECHNICAL FIELD

The present application relates to the field of communications, and more particularly, to a node distribution method and a control center.

### BACKGROUND

Content distribution networks (Content Distribution Network, CDN) relate to a series of content distribution devices overlaid on an internet protocol (Internet Protocol, IP) carrier network, which are capable of guiding a user request to a service node closest to the user in real time according to integrated information a such s network flow and the connection and loading conditions of each node as well as the distance to the user and response time or the like through dynamic deployment and access scheduling of the contents in a distribution network, so as to locally provide content services to the user at the edge of the network, to solve the condition of network congestion, and improve the response speed of the user for accessing website contents.

Wherein, in a CDN scheduling model, while selecting a node for the user, a CDN control center determinejdetermines whether the nodes can provide services to the user in sequence according to the quality sequence of the nodes. However, because there are too many CDN nodes, the bandwidth utilization ratio of partial CDN nodes may be over-high while the bandwidth utilization ratio of some CDN nodes will be low, i.e., the pressures among the nodes are not balanced. However, the bandwidth charging methods of each internet data center (Internet Data Center, IDC) are different, for example, charging by month or by flow, which may cause a problem of bandwidth resource wasting for the nodes with low bandwidth utilization ratio.

### SUMMARY

The embodiments of the present application provide a node distribution method and a control center, which solves the problems of unbalanced pressures among the nodes and bandwidth resource wasting, determines whether a bandwidth configured for nodes of a user equipment in a default set is completely occupied, and balances the pressure among the nodes when the bandwidth configured for the node is not completely occupied, so that the pressures among the nodes are balanced, and the management effect of preferential utilization of resources is achieved.

In order to fulfill the foregoing objects, the embodiments of the present application employ the following technical solutions.

According to a first aspect, there is provided a node distribution method, wherein the method includes:
receiving a scheduling request message sent by a user equipment;
determining whether the user equipment is in a default set according to the scheduling request message;
if the user equipment is in the default set, determining whether a bandwidth configured for a node of the user equipment is completely occupied, and acquiring a determination result; wherein, the node is a preferred node pre-configured for the user equipment; and
scheduling the user equipment to access the preferred node or other nodes excluding the preferred node according to the determination result.

According to a second aspect, there is provided a computer-readable record medium recording a program configured to conduct the method above.

According to a third aspect, there is provided a control center, wherein the control center includes:
a receiving module configured to receive a scheduling request message sent by a user equipment;
a determination module configured to determine whether the user equipment is a default set according to the scheduling request message;
if the user equipment is in the default set, determine whether a bandwidth configured for a node of the user equipment is completely occupied, and acquire a determination result; wherein, the node is a preferred node pre-configured for the user equipment; and
a first scheduling module configured to schedule the user equipment to access the preferred node or other nodes excluding the preferred node according to the determination result.

According to a fourth aspect, there is provided a node scheduling system, wherein the system includes:
the control center according to the third aspect;
a user equipment configured to send a scheduling request message to the control center and respond to the scheduling of the control center to access nodes; and
a plurality of nodes configured to be accessed by the user equipment responding to the scheduling of the control center.

According to the node distribution method and the control center provided by the embodiments of the present application, when receiving the scheduling request message sent by the user equipment, the user equipment is determined whether to be in a default set according to the scheduling request message; and if the user equipment is in the default set, the bandwidth configured for the node of the user equipment is determined whether to be completely occupied, and the determination result is acquired; wherein, the node is the preferred node pre-configured for the user equipment; therefore, the user equipment is scheduled to access the preferred node or other nodes excluding the preferred node according to the determination result, so that the pressures among the nodes are balanced, and the management effect of preferential utilization of resources is achieved.

### BRIEF DESCRIPTION OF THE DRAWINGS

Fig. 1 is a flow chart of a method according to a first embodiment of the present application.
Fig. 2 is a flow chart of a method according to a second embodiment of the present application.
Fig. 3 is a flow chart of a method according to a third embodiment of the present application.
Fig. 4 is a flow chart of a method according to the third embodiment of the present application.
Fig. 5 is a schematic diagram of a method according to a fourth embodiment of the present application.
Fig. 6 is a schematic diagram of a structure according to a fifth embodiment of the present application.
Fig. 7 is a schematic diagram of a structure according to the fifth embodiment of the present application.
Fig. 8 is a schematic diagram of a structure according to a sixth embodiment of the present application.
Fig. 9 is a schematic diagram of a structure according to the sixth embodiment of the present application.
Fig. 10 is a schematic diagram of a system according to a seventh embodiment of the present application.

### PREFERRED EMBODIMENTS

The implementation manners of the present application will be explained in details with reference to the drawings and embodiments hereinafter, so that the realization process of how to solve the technical problems by using a technical means and achieve the technical efficacy can be sufficiently understood and implemented accordingly.

### First Embodiment

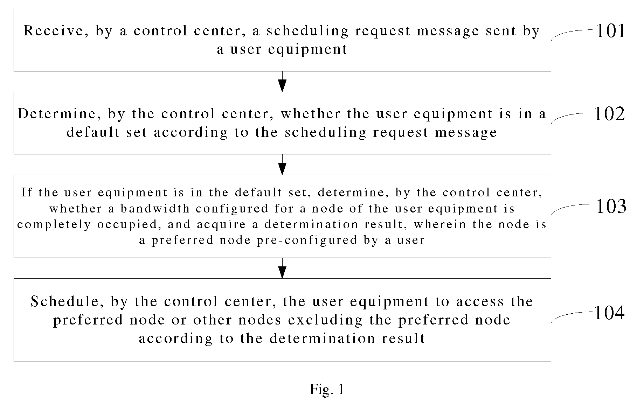

Fig. 1 is a flow chart of a method according to a first embodiment of the present application.

Referring to Fig. 1, the embodiment of the present application provides a node distribution method, including the following steps.

In 101, a control center receives a scheduling request message sent by a user equipment.

Wherein, the control center herein refers to an equipment in a scheduling model of a content distribution network CDN for the user equipment to schedule nodes when the user equipment access the network, so that the user equipment can acquire contents needed from the cache of the nodes. The CDN control center is connected to a plurality of node networks, and the CDN control center can guide a user request to a service node closest to the user in real time according to such integrated information as network flow and the connection and loading conditions of each node as well as the distance to the user and response time or the like through dynamic deployment and access scheduling of the contents, so as to locally provide content services to the user at the edge of the network. When the user equipment wants to access website, the scheduling request message may be sent to the CDN control center, so that the CDN control center selects a node for the user equipment, and then the user equipment can acquire the contents needed from the selected node.

In 102, the control center determines whether the user equipment is in a default set according to the scheduling request message.

To be specific, "preferentially occupied" nodes are configured for partial users in the CDN control center, wherein the default set herein can be understood as the "preferentially occupied" nodes pre-configured for partial users, and the determination of the default set may be divided by regions. That is, user equipments in a designated region are set as a default set; when the scheduling request message sent by a user equipment is received, then the user equipment can be firstly determined whether to be in the default set.

For example, at least one set is created in advance, wherein the identification information of the user equipment like one or more of the sequence No., IP address or MAC address of the user equipment is stored in the set, and the set can be called "default identification set". A corresponding default identification set may be respectively established for user equipments in different regions or at different levels. During scheduling, the identification information of the user equipment in the scheduling request message may be acquired firstly, wherein the user of the identification information identifies the user equipment. Then the identification information is determined whether to be in the default identification set; if the identification information is in the default identification set, the user equipment is determined to be in a default set corresponding to the default identification set.

Wherein, the "preferentially occupied" nodes are preferentially selected nodes which are configured for the user equipment in the default set. That is, when the user equipment is in the default set, the CDN control center schedules the user equipment onto the preferentially selected nodes.

In 103, if the user equipment is in the default set, the control center determines whether a bandwidth configured for a node of the user equipment is completely occupied, and acquires a determination result; wherein, the node is a preferred node pre-configured by the user.

To be specific, if the user equipment is in the default set, the CDN control center sends a bandwidth request message to the node configured for the user equipment, the node being a preferred node pre-configured for the user equipment, and then receives a response message sent by the preferred node, the response message including the bandwidth information of the preferred node, so as to determine whether the bandwidth of the preferred node is completely occupied according to the bandwidth information, and acquire the determination result.

In 104, the control center schedules the user equipment to access the preferred node or other nodes excluding the preferred node according to the determination result.

To be specific, if the determination result is that the bandwidth of the preferred node is not completely occupied, the user equipment is scheduled to access the preferred node, so that the preferred node serves the user equipment; if the determination result is that the bandwidth of the preferred node is completely occupied, the user equipment is scheduled to access other nodes excluding the preferred node, so that the other nodes serve the user equipment. To be specific, one node may be selected by determining whether the other nodes can serve the user equipment in sequence according to the quality sequence of the other nodes.

In this way, since more user equipments are configured to the "preferentially occupied" preferred node, the bandwidth of the node can be preferentially used, and then the rest users outside the default set access other nodes, so that the pressures among the nodes can be balanced, and the management effect of preferential utilization of resources can be achieved.

According to the node distribution method provided by the embodiment of the present application, when receiving the scheduling request message sent by the user equipment, the user equipment is determined whether to be in a default set according to the scheduling request message; and if the user equipment is in the default set, the bandwidth configured for the node of the user equipment is determined whether to be completely occupied, and the determination result is acquired; wherein, the node is the preferred node pre-configured by the user; and the user equipment is scheduled to access the preferred node or other nodes excluding the preferred node according to the determination result, so that the pressures among the nodes are balanced, and the management effect of preferential utilization of resources is achieved.

### Second Embodiment:

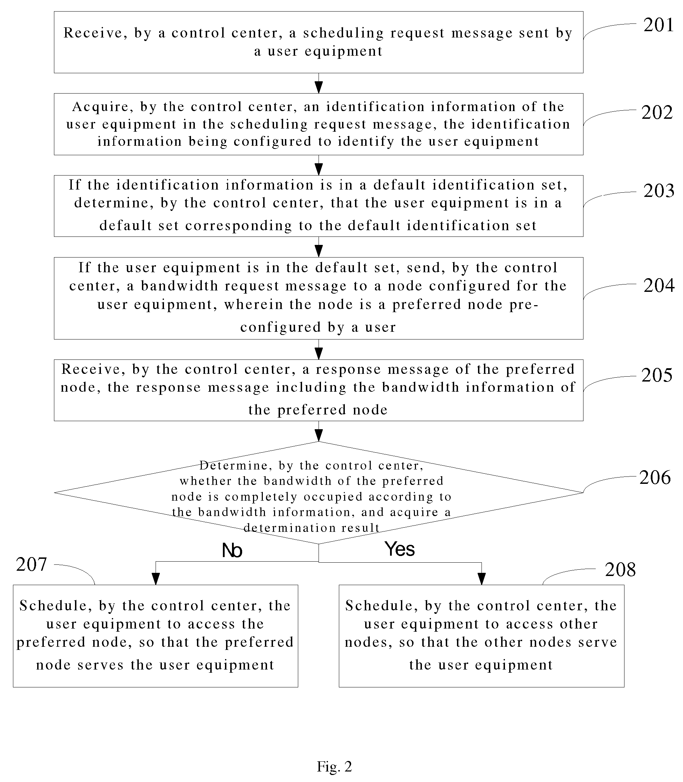

Fig. 2 is a flow chart of a method according to a second embodiment of the present application.

Referring to Fig. 2, the embodiment of the present application provides a node distribution method, including the following steps.

In 201, a control center receives a scheduling request message sent by a user equipment.

Wherein, in a scheduling model of a content distribution network CDN, when a user wants to access website, it is desirable to send a scheduling request message to a CDN control center, so that the CDN control center schedules the user equipment onto one node therein, then the user equipment can access the contents in the node. Generally speaking, the CDN control center while selecting nodes for the user equipment, may determine whether the nodes can serve the user equipment in sequence according to the quality of the nodes. Wherein, the CDN control center is connected to a plurality of node networks, and one node may provide services for a plurality of user equipments.

In 202, the control center acquires the identification information of the user equipment in the scheduling request message, the identification information being configured to identify the user equipment.

To be specific, the CDN control center may acquire the identification information in the scheduling request message, the identification information being configured to identify the user equipment, so as to determine whether the user equipment is in the default set according to the identification information.

In 203, if the identification information is in the default identification set, the control center determines that the user equipment is in a default set corresponding to the default identification set.

To be specific, if the identification information is determined to be in the default identification set, the control center determines that the user equipment is in the default set. Wherein, the default set may be a pre-configured user set, for example, the default set may be divided by a region, and the user equipments in the region are set as a default set. Moreover, the default set may also be set through other manners (i.e., partial user equipments are divided), which will not be defined herein, so that "preferentially occupied" nodes are configured for partial user equipments.

For example, at least one set is created in advance, wherein the identification information of the user equipment like one or more of the sequence No., IP address or MAC address of the user equipment is stored in the set, and the set can be called "default identification set". To be specific, a corresponding default identification set may be respectively established for user equipments in different regions or at different levels.

In 204, if the user equipment is in the default set, the control center sends a bandwidth request message to the node configured for the user equipment, wherein the node is a preferred node pre-configured by the user.

To be specific, if the user equipment requesting scheduling is in the default set, the CDN control center determines whether the bandwidth of the "preferentially occupied" node pre-configured for the user equipment is completely occupied. To be specific, a bandwidth request message may be sent to the preferred node through the CDN control center so as to acquire the bandwidth information of the preferred node. Wherein, the preferred node is the "preferentially occupied" node herein. The "preferentially occupied" node can be understood as a node which is configured by the CDN control center for the user equipment in the default set and can be preferentially scheduled. That is, the bandwidth of the preferred node needs to be utilized preferentially. In this way, the problems of low bandwidth utilization ratio of partial CDN nodes and resource wasting caused by selecting the nodes according to the quality sequence can be solved.

In 205, the control center receives a response message of the preferred node, the response message including the bandwidth information of the preferred node.

To be specific, the preferred node acquire the self-provided bandwidth information while receiving the bandwidth request message sent by the CDN control center, and sends a response message to the CDN control center, the response message just including the bandwidth information of the preferred node.

In206, the control center determinedetermines whether the bandwidth of the preferred node is completely occupied according to the bandwidth information, acquires a determination result, and then performs step 207 or step 208.

In 207, if the determination result is that the bandwidth of the preferred node is not completely occupied, the control center schedules the user equipment to access the preferred node.

To be specific, the CDN control center determines that the bandwidth of the preferred node is completely occupied according to the bandwidth information in the response message, and then schedules the user equipment to access the preferred node. That is, the preferred node can provide services for more user equipments.

For example, when acquiring that the bandwidth of the preferred node is not completely occupied, the CDN control center can send the address information of the preferred node to the user equipment, then the user equipment can send a content service request to the preferred node according to the address information of the preferred node, strategy scheduling is conducted for the preferred node in the nodes, an optimum server in the preferred node is selected, and the address information of the optimum server is sent to the user equipment; then the user equipment can send the content service request to the optimum server according to the address information of the optimum server, so as to acquire the contents needed from the cache of the optimum server.

In this way, since more user equipments are configured to the preferred node, the bandwidth of the node can be preferentially used, and then the rest users outside the default set access other nodes, so that the pressures among the nodes are balanced, and the management effect of preferential utilization of resources is achieved.

In 208, if the determination result is that the bandwidth of the preferred node is completely occupied, the control center schedules the user equipment to access other nodes.

To be specific, if the CDN control center determines that the bandwidth of the preferred node is completely occupied according to the bandwidth information in the response message, and the control center selects one of other nodes excluding the preferred node to provide services for the user equipment. To be specific, whether the other nodes can serve the user equipment can be determined in sequence according to the quality sequence of other nodes.

For example, the CDN control center may guide a scheduling request of the user to a service node closest to the user in real time according to such integrated information as network flow and the connection and loading conditions of each node as well as the distance to the user and response time or the like; in this way, the access quality of the user can be guaranteed on one hand, and on the other hand, the access pressure on the content service website of the original site is eased, which can greatly reduce the bandwidth occupancy of backbone networks.

According to the node distribution method provided by the embodiment of the present application, when receiving the scheduling request message sent by the user equipment, the user equipment is determined whether to be in a default set according to the scheduling request message; and if the user equipment is in the default set, the bandwidth configured for the node of the user equipment is determined whether to be completely occupied, and the determination result is acquired; wherein, the node is the preferred node pre-configured by the user; and the user equipment is scheduled to access the preferred node or other nodes excluding the preferred node according to the determination result, so that the pressures among the nodes are balanced, and the management effect of preferential utilization of resources is achieved.

### Third Embodiment:

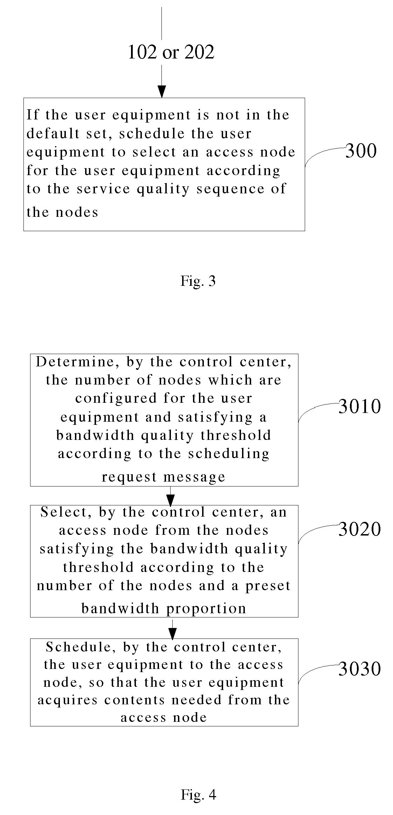

Fig. 3 is a flow chart of a method according to a third embodiment of the present application.

Referring to Fig. 3, the method provided by the embodiment of the present application on the basis of the first or second embodiment includes the following steps:

In 300, step 102 in the first embodiment or step 202 in the second embodiment is continued to determine whether the user equipment is in the default set according to the scheduling request message; if the user equipment is not in the default set, the user equipment is scheduled to select an access node for the user equipment according to the service quality sequence of the nodes.

The service quality of the nodes herein includes the bandwidth quality of the nodes, wherein the bandwidth quality of each node is different, and usually the service quality of the node with good bandwidth quality will also be better. Then the control center schedules the user equipment and selects an access node for the user equipment according to the service quality of the nodes, i.e., the bandwidth quality sequence of the nodes.

To be specific, as shown in Fig. 4, scheduling the user equipment and selecting the access node for the user equipment according to the bandwidth quality sequence of the nodes by the control center further includes the following steps:

In 3010, the control center determines the number of nodes which are configured for the user equipment and satisfying a bandwidth quality threshold according to the scheduling request message.

To be specific, when the CDN control center receives the scheduling request message sent by the user, the bandwidth quality of each node may be acquired through sending the message to each node, wherein the bandwidth quality herein includes at least one of a downloading speed and an uploading speed of the node, a connectivity (ping) value among the nodes and packet loss probability, but are not limited to this, and may also include other contents configured to represent the network quality of the node, i.e., indexes that affect the network speed of the user. Then the bandwidth quality of each node is compared with the bandwidth quality threshold, nodes satisfying the bandwidth quality threshold are selected, and the number of nodes satisfying the bandwidth quality threshold is determined.

In 3020, the control center selects an access node from the nodes satisfying the bandwidth quality threshold according to the number of the nodes and a preset bandwidth proportion.

To be specific, the CDN control center after determining all nodes to be accessed that satisfy the bandwidth quality threshold, records the number of the nodes to be accessed, and then select one access node from the nodes to be accessed for the user equipment according to the preset bandwidth proportion and a random algorithm, so as to schedule the user equipment to the access node determined.

Wherein, the preset bandwidth proportion refers to the occupancy of the bandwidth of the nodes satisfying the bandwidth quality threshold in the total bandwidth required by the user access volume of the nodes satisfying the bandwidth quality threshold.

In 3030, the control center schedules the user equipment to the access node, so that the user equipment acquires contents needed from the access node.

To be specific, the CDN control center after determining the node to be accessed by the user, acquires the address information of the access node, and sends the address information to the user equipment, so that the user equipment accesses the access node determined through the address information, and acquires the contents needed from the access node. In this way, the problem of service quality reduction caused by the nodes with poor user access quality can be solved.

According to the node distribution method provided by the embodiment of the present application, when receiving the scheduling request message sent by the user equipment, the number of nodes which are configured for the user equipment and satisfying the bandwidth quality threshold is determined according to the scheduling request message, so that the access node is selected from the nodes satisfying the bandwidth quality threshold according to the number of nodes and the preset bandwidth proportion, and then the user equipment is scheduled to the access node, so that the user equipment acquires the contents needed from the access node, which can increase the node service quality and improve the response speed of the website.

### Fourth embodiment:

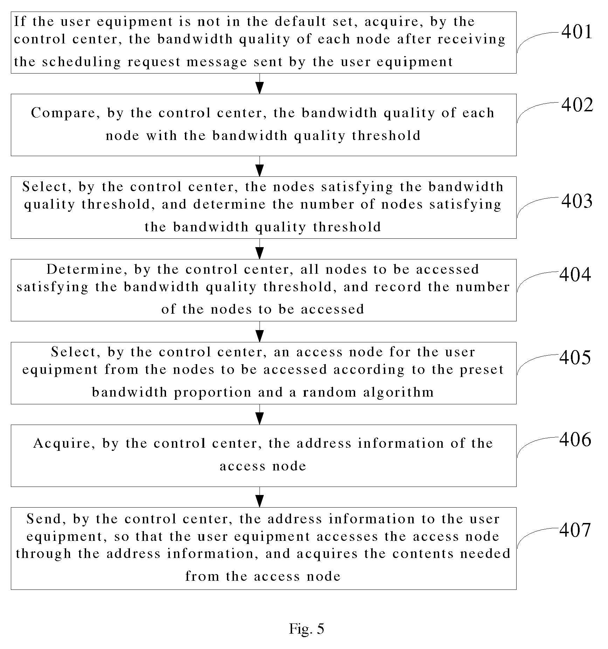

Fig. 5 is a flow chart of a method according to a fourth embodiment of the present application.

Referring to Fig. 5, the method provided by the embodiment of the present application on the basis of the first or second embodiment includes the following steps:

In 401, step 102 in the first embodiment or step 202 in the second embodiment is continued to determine whether the user equipment is in the default set according to the scheduling request message; if the user equipment is not in the default set, the control center acquires the bandwidth quality of each node after receiving the scheduling request message sent by the user equipment.

To be specific, the CDN control center after receiving the scheduling request message sent by the user equipment, may send the request message to each node in the content distribution network to acquire the bandwidth information of each node (for example, the rated bandwidth, the currently occupied bandwidth and the bandwidth quality of the node), and then receives a response message returned by each node, wherein the response message may include the bandwidth quality of each node. The bandwidth quality herein may include at least one of a downloading speed and an uploading speed of the node, a connectivity (ping) value among the nodes and packet loss probability, but are not limited to this, and may also include other contents configured to represent the network quality of the node, i.e., indexes that affect the network speed of the user.

In 402, the control center compares the bandwidth quality of each node with the bandwidth quality threshold.

To be specific, the CDN control center after acquiring the bandwidth quality of each node, may compare the bandwidth quality of the nodes in sequence with the preset bandwidth quality threshold according to the bandwidth quality sequence, so as to determine whether the nodes can serve the user. That is, the node having the bandwidth quality greater than or equal to the bandwidth quality threshold is the node that satisfies the service requirements of the user.

For example, if the preset bandwidth quality threshold is 10G, i.e., the exit bandwidth amount is 10G, each node acquires self-provided bandwidth quality according to the contents included in the bandwidth quality. The preset bandwidth quality threshold is compared with the node having the best bandwidth quality (i.e., the maximal exit bandwidth amount); if the bandwidth quality of the node having the best bandwidth quality is greater than the preset bandwidth threshold, the node is preferentially selected; on the contrary, the node will not be selected. Then the preset bandwidth quality threshold is compared with the node having a bandwidth quality just lower than the best bandwidth quality, and so on, to screen the nodes having the bandwidth quality greater than or equal to the preset bandwidth quality.

In 403, the control center selects the nodes satisfying the bandwidth quality threshold, and determines the number of nodes satisfying the bandwidth quality threshold.

To be specific, after the bandwidth quality of each node is compared with the bandwidth quality threshold, the nodes having the bandwidth quality that satisfies the bandwidth quality threshold may be selected, and the number of nodes satisfying the bandwidth quality threshold may be determined.

For example, the bandwidth quality threshold is 10G, and there are three nodes of which the bandwidth quality is greater than or equal to 10G, then it may be determined that three nodes can serve the user requesting scheduling.

In 404, the control center determines all nodes to be accessed satisfying the bandwidth quality threshold, and records the number of the nodes to be accessed.

In 405, the control center selects an access node for the user equipment from the nodes to be accessed according to the preset bandwidth proportion and a random algorithm.

For example, it is provided that the total bandwidth required by the user access volume of the nodes satisfying the bandwidth quality threshold is 10G, and three nodes to be accessed (i.e., the nodes satisfying the bandwidth quality threshold) are determined, namely node A, node B and node C, while a preset bandwidth proportion in the CDN control center is 6G:3G:1G; that is, a user amount of 6G may be distributed for the node A, a user amount of 3G may be distributed for the node B, and a user amount of 1G may be distributed for the node C; i.e., the bandwidth that can be occupied by the nodes satisfying the bandwidth quality threshold is designated, so as to accurately distribute the bandwidth resources. In this way, the user requesting scheduling at present can be scheduled to one of the nodes satisfying the bandwidth quality threshold which is served as a node that can be accessed by the user.

Wherein, when selecting the access node from the nodes satisfying the bandwidth quality threshold, the user equipment is scheduled to the access node no matter the bandwidth of the access node is completely occupied or not. In this way, users are respectively guided to a plurality of nodes according to the preset proportion, rather than accessing on a plurality of nodes with poor quality, so that the node service quality can be improved.

It should be illustrated that the preset bandwidth proportion herein can be adjusted according to requirements.

In 406, the control center acquires the address information of the access node.

To be specific, the CDN control center after determining the node providing access for the user, may acquire the address information of the access node, so that the user can access the node determined according to the address information. Because the node can be connected to a plurality of node server, the node may send a content request message to the access node after receiving the address information of the access node; the access node may conduct strategy scheduling in the node, select an optimum server, and send the address information of the optimum server to the user equipment, so that the user equipment acquires the contents needed from the optimum server.

In 407, the control center sends the address information to the user equipment, so that the user equipment accesses the access node through the address information, and acquires the contents needed from the access node.

To be specific, according to the explanation in step 406, the address information herein can be the address information of the access node; after the access node sends the address of the optimum server to the user equipment, the user equipment may acquire the contents needed from the optimum server according to the address information of the optimum server.

In this way, when the user accesses the website, the user can be guided to a corresponding node according to a preset bandwidth proportion by scheduling. Once the service quality of the node in the region where the user locates is very poor, the user can be guided according to the preset bandwidth proportion without needing to access those nodes with poor quality, which can increase the node service quality and improve the response speed of the website.

According to the node distribution method provided by the embodiment of the present application, when receiving the scheduling request message sent by the user equipment, the number of nodes which are configured for the user equipment and satisfying the bandwidth quality threshold is determined according to the scheduling request message, so that the access node is selected from the nodes satisfying the bandwidth quality threshold according to the number of nodes and the preset bandwidth proportion, and then the user equipment is scheduled to the access node, so that the user equipment acquires the contents needed from the access node, which can increase the node service quality and improve the response speed of the website.

### Fifth embodiment:

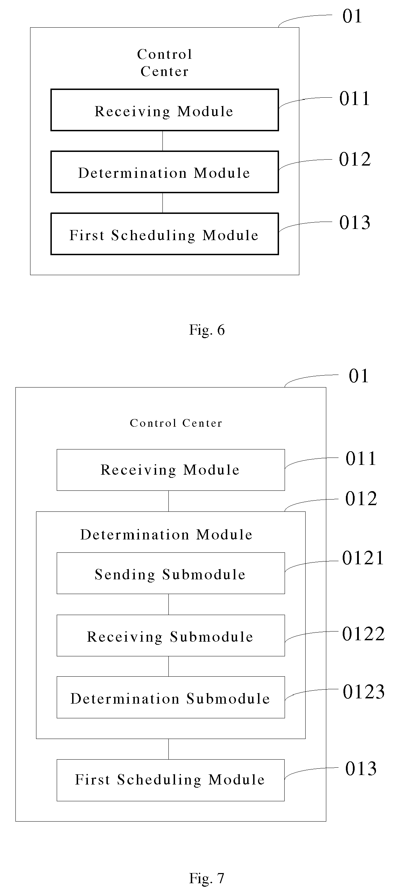

Fig. 6 is a schematic diagram of a structure according to a fifth embodiment of the present application.

Referring to Fig. 6, the embodiment of the present application provides a control center 01, including a receiving module 011, a determination module 012 and a first scheduling module 013.

The receiving module 011 is configured to receive a scheduling request message sent by a user equipment.

The determination module 012 is configured to determine whether the user equipment is in a default set according to the scheduling request message.

If the user equipment is in the default set, the receiving module determines whether a bandwidth configured for a node of the user equipment is completely occupied, and acquires a determination result; wherein, the node is a preferred node pre-configured for the user equipment.

The first scheduling module 013 is configured to schedule the user equipment to access the preferred node or other nodes excluding the preferred node according to the determination result.

Optionally, the determination module 012 may be specifically configured to:
acquire the identification information of the user equipment in the scheduling request message, the identification information being configured to identify the user equipment; and
if the identification information is in a default identification set, determine that the user equipment is in a default set corresponding to the default identification set.

Optionally, referring to Fig. 7, the determination module 012 may include:
a sending submodule 0121 configured to, if the user equipment is in the default set, send a bandwidth request message to the node configured for the user equipment, wherein the node is a preferred node pre-configured for the user equipment;
a receiving submodule 0122 configured to receive a response message of the preferred node, the response message including the bandwidth information of the preferred node; and
a determination submodule 0123 configured to determine whether the bandwidth of the preferred node is completely occupied according to the bandwidth information, and acquire a determination result.

Optionally, the scheduling module 013 may be specifically configured to:
if the determination result is that the bandwidth of the preferred node is not completely occupied, schedule the user equipment to access the preferred node; and
if the determination result is that the bandwidth of the preferred node is completely occupied, schedule the user equipment to access other nodes.

Optionally, the scheduling module 013 may also be configured to: if the user equipment is not in the default set, schedule the user equipment to select an access node for the user equipment according to the service quality sequence of the nodes.

According to the control center provided by the embodiment of the present application, when receiving the scheduling request message sent by the user equipment, the user equipment is determined whether to be in a default set according to the scheduling request message; and if the user equipment is in the default set, the bandwidth configured for the node of the user equipment is determined whether to be completely occupied, and the determination result is acquired; wherein, the node is the preferred node pre-configured by the user; and the user equipment is scheduled to access the preferred node or other nodes excluding the preferred node according to the determination result, so that the pressures among the nodes are balanced, and the management effect of preferential utilization of resources is achieved.

### Sixth embodiment:

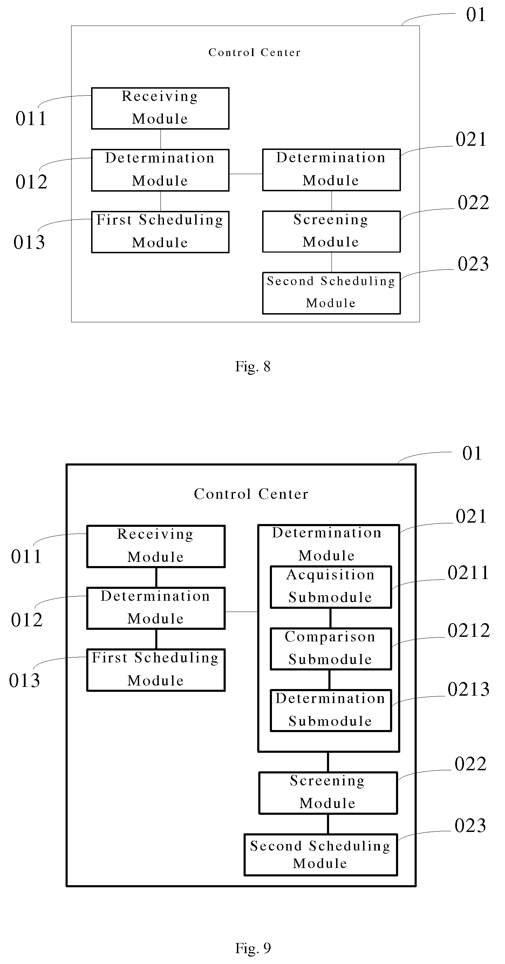

Fig. 8 is a schematic diagram of a structure according to a sixth embodiment of the present application.

Referring to Fig. 8, the control center 01 provided by the embodiment of the present application on the basis of the fifth embodiment may also include a determination module 021, a screening module 022 and a second scheduling module 023.

The determination module 021 is configured to determine the number of nodes which are configured for the user equipment and satisfying a bandwidth quality threshold according to the scheduling request message, the bandwidth quality including at least one of a downloading speed and an uploading speed of the node, a connectivity (ping) value among the nodes and packet loss probability.

The screening module 022 is configured to select an access node from the nodes satisfying the bandwidth quality threshold according to the number of nodes and a preset bandwidth proportion.

The second scheduling module 023 is configured to schedule the user equipment to the access node, so that the user equipment acquires contents needed from the access node.

Optionally, as shown in Fig. 9, the determination module 021 may include:
an acquisition submodule 0211 configured to, after receiving the scheduling request message sent by the user equipment, acquire the bandwidth quality of each node;
a comparison submodule 0212 configured to compare the bandwidth quality of each node with the bandwidth quality threshold; and
a determination submodule 0213 configured to select the nodes satisfying the bandwidth quality threshold, and determine the number of nodes satisfying the bandwidth quality threshold.

Optionally, the screening module 022 may be configured to:
determine all nodes to be accessed satisfying the bandwidth quality threshold, and record the number of the nodes to be accessed; and
select an access node for the user equipment from the nodes to be accessed according to the preset bandwidth proportion and a random algorithm;
wherein, the preset bandwidth proportion refers to the occupancy of the bandwidth of the nodes satisfying the bandwidth quality threshold in the total bandwidth required by the user access volume of the nodes satisfying the bandwidth quality threshold.

Optionally, the second scheduling module 023 may be specifically configured to:
acquire the address information of the access node; and
send the address information to the user equipment, so that the user equipment accesses the access node through the address information and acquires the contents needed from the access node.

Optionally, the second scheduling module 023 may be configured to:
when selecting the access node from the nodes satisfying the bandwidth quality threshold, schedule the user equipment to the access node no matter the bandwidth of the access node is completely occupied or not.

According to the control center provided by the embodiment of the present application, when receiving the scheduling request message sent by the user equipment, the number of nodes which are configured for the user equipment and satisfying the bandwidth quality threshold is determined according to the scheduling request message, so that the access node is selected from the nodes satisfying the bandwidth quality threshold according to the number of nodes and the preset bandwidth proportion, and then the user equipment is scheduled to the access node, so that the user equipment acquires the contents needed from the access node, which can increase the node service quality and improve the response speed of the website.

### Seventh Embodiment:

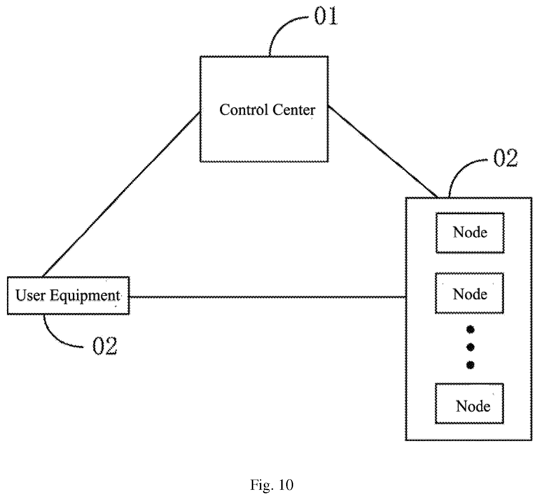

Fig. 10 is a schematic diagram of a structure according to a seventh embodiment of the present application.

Referring to Fig. 10, the embodiment of the present application provides a node scheduling system, including: a control center 01, a user equipment 02 and a plurality of nodes 03. Wherein, the control center 01 is as described in the foregoing fifth and sixth embodiments, and will not be repeatedly described herein. The user equipment 02 is configured to send a scheduling request message to the control center 01 and respond to the scheduling of the control center 01 to access the plurality of nodes 03. The plurality of nodes 03 are configured to be accessed by the user equipment 02 responding to the scheduling of the control center 01.

In case of any inexhaustive parts of the above node scheduling system embodiment, please refer to the foregoing control center embodiment or refer to the node scheduling method embodiment, and the repeated parts will not be excessively described herein.

It should be illustrated that the embodiments in the Description are described in a progressive manner. Each embodiment lays an emphasis on its distinction from other embodiments, and the same or similar portions of the embodiments may refer to each other. The device embodiment is only briefly described because it is substantially similar to the method embodiment, and for the related portions, please refer to corresponding descriptions of the method embodiment.

In the embodiments provided by the present application, it shall be appreciated that the disclosed device and method may be implemented in other ways. For example, the above device embodiments are just exemplary. For example, the module division is just a logical function division, and other division mode may be used in the implementation, e.g., multiple modules or components may be combined or integrated into another system, or some features may be omitted or not executed. Another point is that the displayed or discussed mutual coupling, direct coupling or communication connection may be implemented through indirect coupling or communication connection between some interfaces, devices or units in electrical, mechanical or other forms.

Moreover, each function module in the device and system of the embodiments of the present invention may be integrated into one processing module, or each module exists singly and physically, or two or more than two modules are integrated into one module. The foregoing modules may either be fulfilled by using a hardware form, or be fulfilled by using a form of hardware together with software functional module.

All or a part of the steps of the above method embodiments may be performed by instructing relevant hardware through a program, and the forementioned program may be stored in a computer-readable storage medium. During execution of the program, the steps of the above method embodiments are executed. The forementioned storage medium includes: any medium that is capable of storing program codes, such as a U disk, a mobile hard disk drive, a read-only memory (Read-Only Memory, referred to as ROM), a random access memory (Random Access Memory, referred to as RAM), a magnetic disk, or an optical disk.

### Industrial Applicability

By applying the foregoing technical solutions, the node distribution method and the control center provided by the present application can schedule the user equipment to access the preferred node or other nodes excluding the preferred node, so that the pressures among the nodes are balanced, and the management effect of preferential utilization of resources is achieved, which increases the node service quality and improves the response speed of the website.

## Claims

1. A node distribution method, comprising:
receiving a scheduling request message sent by a user equipment;
determining whether the user equipment is in a default set according to the scheduling request message;
if the user equipment is in the default set, determining whether a bandwidth configured for a node of the user equipment is completely occupied, and acquiring a determination result; wherein, the node is a preferred node pre-configured for the user equipment; and
scheduling the user equipment to access the preferred node or other nodes excluding the preferred node according to the determination result.

2. The method according to claim 1, wherein the method further comprises:
if the user equipment is not in the default set, scheduling the user equipment to select an access node for the user equipment according to the service quality sequence of the nodes.

3. The method according to claim 2, wherein
the service quality of the nodes comprises the bandwidth quality of the nodes; and scheduling the user equipment to select the access node for the user equipment according to the service quality sequence of the nodes further comprises:
determining the number of nodes which are configured for the user equipment and satisfying a bandwidth quality threshold according to the scheduling request message, the bandwidth quality comprising at least one of a downloading speed and an uploading speed of the node, a connectivity value among the nodes and packet loss probability;
selecting an access node from the nodes satisfying the bandwidth quality threshold according to the number of nodes and a preset bandwidth proportion; and
scheduling the user equipment to the access node, so that the user equipment acquires contents needed from the access node.

4. The method according to claim 3, wherein the determining the number of nodes which are configured for the user equipment and satisfying the bandwidth quality threshold according to the scheduling request message comprises:
after receiving the scheduling request message sent by the user equipment, acquiring the bandwidth quality of each node;
comparing the bandwidth quality of each node with the bandwidth quality threshold; and
selecting the nodes satisfying the bandwidth quality threshold, and determining the number of nodes satisfying the bandwidth quality threshold.

5. The method according to claim 4, wherein the selecting the access node from the nodes satisfying the bandwidth quality threshold according to the number of nodes and the preset bandwidth proportion comprises:
determining all nodes to be accessed satisfying the bandwidth quality threshold, and recording the number of the nodes to be accessed; and
selecting an access node for the user equipment from the nodes to be accessed according to the preset bandwidth proportion and a random algorithm;
wherein, the preset bandwidth proportion refers to the occupancy of the bandwidth of the nodes satisfying the bandwidth quality threshold in the total bandwidth required by the user access volume of the nodes satisfying the bandwidth quality threshold.

6. The method according to claim 5, wherein the scheduling the user equipment to the access node, so that the user equipment acquires contents needed from the access node comprises:
acquiring the address information of the access node; and
sending the address information to the user equipment, so that the user equipment accesses the access node through the address information and acquires the contents needed from the access node.

7. The method according to claim 5, wherein when selecting the access node from the nodes satisfying the bandwidth quality threshold, the user equipment is scheduled to the access node no matter the bandwidth of the access node is completely occupied or not.

8. The method according to claim 1, wherein the step of determining whether the user equipment is in the default set according to the scheduling request message comprises:
acquiring the identification information of the user equipment in the scheduling request message, the identification information being configured to identify the user equipment; and
if the identification information is in a default identification set, determining that the user equipment is in a default set corresponding to the default identification set.

9. The method according to claim 1, wherein the step of determining whether the bandwidth configured for the node of the user equipment is completely occupied if the user equipment is in the default set, and acquiring the determination result comprises:
if the user equipment is in the default set, sending a bandwidth request message to the node configured for the user equipment, wherein the node is a preferred node pre-configured for the user equipment;
receiving a response message of the preferred node, the response message comprising the bandwidth information of the preferred node; and
determining whether the bandwidth of the preferred node is completely occupied according to the bandwidth information, and acquiring a determination result.

10. The method according to claim 9, wherein the step of scheduling the user equipment to access the preferred node or other nodes excluding the preferred node according to the determination result comprises:
if the determination result is that the bandwidth of the preferred node is not completely occupied, scheduling the user equipment to access the preferred node; and
if the determination result is that the bandwidth of the preferred node is completely occupied, scheduling the user equipment to access other nodes.

11. A computer-readable record medium recording a program configured to conduct the method according to any one of claims 1 to 10.

12. A control center, comprising:
a receiving module configured to receive a scheduling request message sent by a user equipment;
a determination module configured to determine whether the user equipment is in a default set according to the scheduling request message;
if the user equipment is in the default set, determining whether a bandwidth configured for a node of the user equipment is completely occupied, and acquiring a determination result; wherein, the node is a preferred node pre-configured for the user equipment; and
a first scheduling module configured to schedule the user equipment to access the preferred node or other nodes excluding the preferred node according to the determination result.

13. The control center according to claim 12, wherein the determination module is specifically configured to:
acquire an identification information of the user equipment in the scheduling request message, the identification information being configured to identify the user equipment; and
if the identification information is in a default identification set, determine that the user equipment is in a default set corresponding to the default identification set.

14. The control center according to claim 12, wherein the determination module comprises:
a sending submodule configured to, if the user equipment is in the default set, send a bandwidth request message to the node configured for the user equipment, wherein the node is a preferred node pre-configured for the user equipment;
a receiving submodule configured to receive a response message of the preferred node, the response message comprising the bandwidth information of the preferred node; and
a determination submodule configured to determine whether the bandwidth of the preferred node is completely occupied according to the bandwidth information, and acquire a determination result.

15. The control center according to claim 14, wherein the first scheduling module is specifically configured to:
if the determination result is that the bandwidth of the preferred node is not completely occupied, schedule the user equipment to access the preferred node; and
if the determination result is that the bandwidth of the preferred node is completely occupied, schedule the user equipment to access other nodes.

16. The control center according to claim 12, wherein the first scheduling module is also configured to: if the user equipment is not in the default set, schedule the user equipment to select an access node for the user equipment according to the service quality sequence of the nodes.

17. The control center according to claim 12, wherein the control center further comprises:
a determination module configured to, if the user equipment is not in the default set, determine the number of nodes which are configured for the user equipment and satisfying a bandwidth quality threshold according to the scheduling request message, the bandwidth quality comprising at least one of a downloading speed and an uploading speed of the node, a connectivity value among the nodes and packet loss probability;
a screening module configured to select an access node from the nodes satisfying the bandwidth quality threshold according to the number of nodes and a preset bandwidth proportion; and
a second scheduling module configured to schedule the user equipment to the access node, so that the user equipment acquires contents needed from the access node.

18. The control center according to claim 17, wherein the determination module comprises:
an acquisition submodule configured to, after receiving the scheduling request message sent by the user equipment, acquire the bandwidth quality of each node;
a comparison submodule configured to compare the bandwidth quality of each node with the bandwidth quality threshold; and
a determination submodule configured to select the nodes satisfying the bandwidth quality threshold, and determine the number of nodes satisfying the bandwidth quality threshold.

19. The control center according to claim 17, wherein the screening module is specifically configured to:
determine all nodes to be accessed satisfying the bandwidth quality threshold, and record the number of the nodes to be accessed; and
select an access node for the user equipment from the nodes to be accessed according to the preset bandwidth proportion and a random algorithm;
wherein, the preset bandwidth proportion refers to the occupancy of the bandwidth of the nodes satisfying the bandwidth quality threshold in the total bandwidth required by the user access volume of the nodes satisfying the bandwidth quality threshold.

20. The control center according to claim 17, wherein the second scheduling module is specifically configured to:
acquire an address information of the access node; and
send the address information to the user equipment, so that the user equipment accesses the access node through the address information and acquires the contents needed from the access node.

21. The control center according to claim 17, wherein the step of the second scheduling module is configured to:
when selecting the access node from the nodes satisfying the bandwidth quality threshold, schedule the user equipment to the access node no matter the bandwidth of the access node is completely occupied or not.

22. A node scheduling system, comprising:
the control center according to any one of claims 12 to 21;
a user equipment configured to send a scheduling request message to the control center and respond to the scheduling of the control center to access nodes; and
a plurality of nodes configured to be accessed by the user equipment responding to the scheduling of the control center.
